# EUROPEAN PATENT APPLICATION

(11) **EP 4 181 615 A1**
(43) Date of publication of application: **17.05.2023**
(21) Application number: 21850246.6
(22) Date of filing: 30.07.2021
(51) Int. Cl.: H04W 76/10, H04W 72/04

(54) **METHOD AND APPARATUS FOR ESTABLISHING CONNECTION, AND DEVICE**

(30) Priority: 31.07.2020 CN 202010763629
(71) Applicant: Vivo Mobile Communication Co., Ltd., Dongguan, Guangdong 523863 (CN)
(72) Inventor: ZHANG, Yanxia, Dongguan, Guangdong 523863 (CN); XIE, Zhenhua, Dongguan, Guangdong 523863 (CN)
(74) Representative: Murgitroyd & Company
(86) International application number: PCT/CN2021/109636
(87) International publication number: WO 2022/022686

(57) **Abstract**

This application discloses a connection establishment method, apparatus, and device. The method includes: sending, by a first terminal, first information to a radio access network side device in a case that there are no valid AS security parameters. The first information is used to obtain an indication of a connection state operation via the radio access network side device.

## Description

### CROSS-REFERENCE TO RELATED APPLICATION

This application claims priority to Chinese Patent Application No. 202010763629.7 filed in China on July 31, 2020, which is incorporated herein by reference in its entirety.

### TECHNICAL FIELD

This application belongs to the field of communication technologies, and specifically relates to a connection establishment method, apparatus, and device.

### BACKGROUND

In the prior art, a core network (Core Network, CN) and a radio access network (Radio Access Network, RAN) are supported in establishing a shared channel for a multicast service, but an air interface sends multicast service data in a multicast or unicast manner. Therefore, a terminal (UE) does not need to establish a per UE connection with the core network, but only needs to establish a connection with the RAN. Currently, a connection establishment method for this scenario is unavailable in the prior art.

### SUMMARY

Embodiments of this application aim to provide a connection establishment method, apparatus, and device, to enable a terminal to establish a connection with only a radio access network side device.

To resolve the foregoing technical problem, this application is implemented as follows:

According to a first aspect, a connection establishment method is provided. The method is applied to a first terminal and includes:
sending first information to a radio access network side device in a case that there are no valid AS security parameters, where
the first information is used to obtain an indication of a connection state operation via the radio access network side device.

According to a second aspect, a connection establishment apparatus is provided. The apparatus is applied to a first terminal and includes:
a first sending module, configured to send first information to a radio access network side device in a case that there are no valid AS security parameters, where
the first information is used to obtain an indication of a connection state operation via the radio access network side device.

According to a third aspect, a connection establishment method is provided. The method is applied to a second terminal and includes:
sending fourth information to a first terminal in a case that there are no valid AS security parameters, where
the fourth information is used to obtain an indication of a connection state operation via the first terminal.

According to a fourth aspect, a connection establishment apparatus is provided. The apparatus is applied to a second terminal and includes:
a fourth sending module, configured to send fourth information to a first terminal in a case that there are no valid AS security parameters,
where the fourth information is used to obtain an indication of a connection state operation via the first terminal.

According to a fifth aspect, a connection establishment method is provided. The method is applied to a radio access network side device and includes at least one of the following:
receiving first information from a first terminal, and sending or refusing to send the first information to a core network side device, where the first information is used by the core network side device to send or refuse to send third information to the radio access network side device based on the first information; and
receiving the first information from the first terminal, and sending or refusing to send the first information to the core network side device, where the first information is used by the core network side device to send or refuse to send fifth information to the radio access network side device based on the first information.

According to a sixth aspect, a connection establishment apparatus is provided. The apparatus is applied to a radio access network side device and includes:
a fifth receiving module, configured to: receive first information from a first terminal, and send or refuse to send the first information to a core network side device, where the first information is used by the core network side device to send or refuse to send third information to the radio access network side device based on the first information; and
a sixth receiving module, configured to: receive the first information from the first terminal, and send or refuse to send the first information to the core network side device, where the first information is used by the core network side device to send or refuse to send fifth information to the radio access network side device based on the first information.

According to a seventh aspect, a connection establishment method is provided. The method is applied to a core network side device and includes:
receiving, via a radio access network side device, first information from a first terminal, or receiving, via the radio access network side device, first information including fourth information from a second terminal; and
sending or refusing to send third information to the radio access network side device based on the first information, where the third information is used by the radio access network side device to send second information to the first terminal based on the third information; or
sending or refusing to send fifth information to the radio access network side device based on the fourth information, where the fifth information is used by the radio access network side device to send second information to the first terminal based on the fifth information.

According to an eighth aspect, a connection establishment apparatus is provided. The apparatus is applied to a core network side device and includes:
an eighth receiving module, configured to: receive, via a radio access network side device, first information from a first terminal, or receive, via the radio access network side device, first information including fourth information from a second terminal; and
a sixth sending module, configured to send or refuse to send third information to the radio access network side device based on the first information, where the third information is used by the radio access network side device to send second information to the first terminal based on the third information; or
a seventh sending module, configured to send or refuse to send fifth information to the radio access network side device based on the fourth information, where the fifth information is used by the radio access network side device to send second information to the first terminal based on the fifth information.

According to a ninth aspect, a terminal is provided, including a processor, a memory, and a program or instructions stored in the memory and executable on the processor, where when the program or instructions are executed by the processor, steps of the connection establishment method according to the first aspect or steps of the connection establishment method according to the third aspect are implemented.

According to a tenth aspect, a radio access network side device is provided, including a processor, a memory, and a program or instructions stored in the memory and executable on the processor, where when the program or instructions are executed by the processor, steps of the connection establishment method according to the fifth aspect are implemented.

According to an eleventh aspect, a core network side device is provided, including a processor, a memory, and a program or instructions stored in the memory and executable on the processor, where when the program or instructions are executed by the processor, steps of the connection establishment method according to the seventh aspect are implemented.

According to a twelfth aspect, a readable storage medium is provided. The readable storage medium stores a program or instructions, where when the program or instructions are executed by a processor, steps of the connection establishment method according to the first aspect, steps of the connection establishment method according to the third aspect, steps of the connection establishment method according to the fifth aspect, or steps of the connection establishment method according to the seventh aspect are implemented.

According to a thirteenth aspect, a chip is provided. The chip includes a processor and a communications interface, where the communications interface is coupled to the processor, and the processor is configured to: execute a program or instructions of a terminal to implement the method according to the first aspect or the method according to the third aspect, execute a program or instructions of a radio access network side device to implement the method according to the fifth aspect, or execute a program or instructions of a core network side device to implement the method according to the seventh aspect.

According to the embodiments of this application, after establishing a connection with a radio access network side device, a terminal sends first information to the radio access network side device, and obtains a connection state operation via the radio access network side device. In this way, the terminal is enabled to establish a connection with only the radio access network side device, without keeping connected to a core network side device all the time.

### BRIEF DESCRIPTION OF DRAWINGS

FIG. 1a is a first schematic flowchart of a connection establishment method according to an embodiment of this application;
FIG. 1b is a schematic diagram of a relay scenario according to an embodiment of this application;
FIG. 2 is a second schematic flowchart of a connection establishment method according to an embodiment of this application;
FIG. 3 is a third schematic flowchart of a connection establishment method according to an embodiment of this application;
FIG. 4 is a fourth schematic flowchart of a connection establishment method according to an embodiment of this application;
FIG. 5 is a first schematic structural diagram of a connection establishment apparatus according to an embodiment of this application;
FIG. 6 is a second schematic structural diagram of a connection establishment apparatus according to an embodiment of this application;
FIG. 7 is a third schematic structural diagram of a connection establishment apparatus according to an embodiment of this application;
FIG. 8 is a fourth schematic structural diagram of a connection establishment apparatus according to an embodiment of this application;
FIG. 9 is a schematic structural diagram of a communications device according to an embodiment of this application;
FIG. 10 is a schematic structural diagram of a terminal according to an embodiment of this application;
FIG. 11 is a schematic structural diagram of a radio access network side device according to an embodiment of this application; and
FIG. 12 is a schematic structural diagram of a core network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the quantity of objects is not limited. For example, there may be one or more first objects. In addition, "and/or" used in the specification and claims means at least one of the associated objects. The character "/" generally indicates an "or" relationship between the associated objects.

It should be noted that the technology described in the embodiments of this application is not limited to a long term evolution (Long Time Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The technologies described can be applied to the above-mentioned systems and radio technologies as well as other systems and radio technologies. However, a new radio (New Radio, NR) system is described in the following description for illustrative purposes, and the NR terminology is used in most of the following description, although these technologies can also be applied to applications other than the NR system application, such as the 6-th generation (6-th Generation, 6G) communications system.

In this embodiment of this application, a terminal may be also referred to as a terminal device or user equipment (User Equipment, UE). The terminal may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VLTE), or pedestrian user equipment (PUE). The wearable device includes a bracelet, a headset, glasses, or the like. It should be noted that a specific type of the terminal is not limited in the embodiments of this application. A radio access network side device 12 may be a base station. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmission and reception point (Transmitting Receiving Point, TRP), or other certain appropriate terms in the art, provided that the same technical effects are achieved. The base station is not limited to specific technical vocabulary. It should be noted that in the embodiments of this application, a base station in the NR system is merely used as an example, but does not limit a specific type of the base station.

The following content is first described for better understanding of the solutions provided in this application.

In an LTE system, a multimedia broadcast and multicast service (Multimedia Broadcast Multicast Service, MBMS) may be sent in two modes: MBMS single frequency network (Multimedia Broadcast multicast service Single Frequency Network, MBSFN) and single cell-point to multi-point (single cell-point to multi-point, SC-PTM).

MBSFN mode: A plurality of cells in a same MBSFN region synchronously send a same multicast service. From a UE side, it is equivalent to receiving same data through a plurality of paths. Transmission is performed through a physical multicast channel (Physical Multicast Channel, PMCH) in an MBSFN subframe. Control information (a control channel parameter, a traffic channel parameter, scheduling information, or the like) and data information of the MBMS are both sent in a broadcast mode, so that both UE in an idle (idle) state and UE in a connection state can receive the MBMS. In addition, the data information of the MBMS is sent only in an MBSFN subframe. Control information related to a multicast service is sent through system information (for example, SIB 13) and a multicast control channel (Multicast Control Channel, MCCH), and data is sent through a multicast traffic channel (Multicast Traffic Channel, MTCH).

SC-PTM mode: Transmission is performed through a physical downlink shared channel (Physical Downlink Shared Channel, PDSCH) scheduled by a physical downlink control channel (Physical Downlink Control Channel, PDCCH). Control information is sent through system information (for example, SIB20) and a single cell multicast control channel (Single Cell Multicast Control Channel, SC-MCCH), and data is sent through a single cell multicast traffic channel (Single Cell Multicast Traffic Channel, SC-MTCH). The SC-MCCH is sent through a PDSCH scheduled by a single cell radio network temporary identifier (Single Cell Radio Network Temporary Identity, SC-RNTI) PDCCH, and the SC-MTCH is sent through a PDSCH scheduled by a group-radio network temporary identifier (Group-Radio Network Temporary Identity, G-RNTI) PDCCH.

With reference to the accompanying drawings, the following describes in detail the connection establishment method in the embodiments of this application based on specific embodiments and application scenarios thereof.

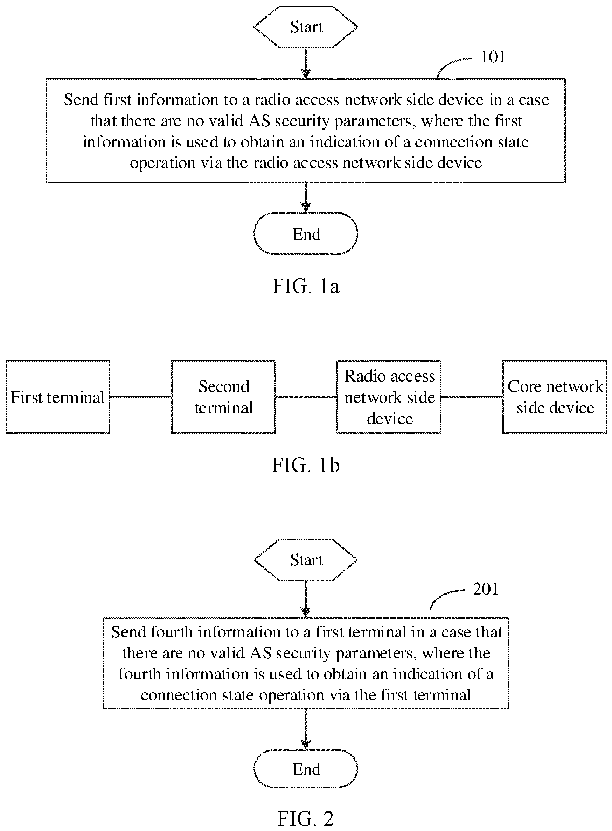

Referring to FIG. 1a, an embodiment of this application provides a connection establishment method. The method is applied to a first terminal and includes the following step:
Step 101: Send first information to a radio access network side device in a case that there are no valid AS security parameters, where the first information is used to obtain an indication of a connection state operation via the radio access network side device.

In this embodiment of this application, the case that there are no valid AS security parameters may be the following case: The first terminal requests a radio resource control (Radio Resource Control, RRC) connection from the radio access network side device, the radio access network side device agrees to establish the RRC connection, and the first terminal enters a connected state from an idle state, but access stratum AS security has not been activated.

As an example, the terminal may carry the first information via an RRCSetupComplete message, and send the first information to the radio access network side device.

According to this embodiment of this application, after establishing the connection with the radio access network side device, the terminal sends the first information to the radio access network side device, and obtains the indication of the connection state operation via the radio access network side device. In this way, the terminal can obtain the indication of the connection state operation via the radio access network side device, and perform the connection state related operation based on the instruction, only when the connection with the radio access network side device is established. Therefore, the terminal is enabled to establish a connection with only the radio access network side device, without being connected to a core network side device all the time.

In some implementations, the first information is non-NAS information. In this way, the connection without the core network side device can be implemented via a signaling process.

In some implementations, a core network management state of the first terminal is an idle state. In this way, the connection without the core network side device can be implemented locally.

In some implementations, the first information is generated based on a non-access stratum (Non Access Stratum, NAS) security parameter of the first terminal. In this way, the radio access network side device may send the first information to the core network side device, and the core network side device may verify the first terminal based on the first information.

Further, in some implementations, after the sending first information to a radio access network side device, the method further includes: receiving second information sent by the radio access network side device; and performing a connection state related operation based on the second information.

In this embodiment of this application, the performing a connection state related operation based on the second information includes at least one of the following:
(1) entering a wirelessly disconnected state, or releasing a wireless connection, where as an example, the wirelessly disconnected state may be an idle state;
(2) switching to or maintaining a wirelessly connected state, or maintaining a wireless connection; and
(3) switching to a core network connected state, or performing a core network-connection establishment process.

Optionally, in some implementations, the default operation is performed if the first terminal does not receive the second information within the time specified in the protocol or configured by the network.

As an example, the first terminal starts a first timer when starting to send the first information to the radio access network side device, when finishing sending the first information to the radio access network side device, or after sending the first information to the radio access network side device, where duration of the first timer may be specified in the protocol or configured by the network.

The first timer is stopped if the second information is received in a running period of the first timer.

The default operation is performed when the first timer expires.

In this embodiment of this application, the default operation includes one of the following:
entering a wirelessly disconnected state, or releasing a wireless connection;
switching to or maintaining a wirelessly connected state, or maintaining a wireless connection; and
switching to a core network connected state, or performing a core network-connection establishment process.

Optionally, referring to FIG. 1b which shows a relay scenario, the first terminal is a relay terminal of the second terminal, that is, the first terminal is relay UE (for example, a layer 2 relay UE), and the second terminal is remote UE.

For this scenario, the method further includes:
(1) receiving fourth information sent by a second terminal; and
(2) sending the first information to the radio access network side device.

In this embodiment of this application, the first information is the fourth information, or the first information is generated based on a NAS security parameter of the first terminal and the fourth information. Optionally, the fourth information is generated based on a NAS security parameter of the second terminal.

Further, after the sending first information to a radio access network side device, the method further includes:
(3) receiving second information sent by the radio access network side device; and
(4) sending sixth information to the second terminal based on the second information, where the sixth information is used to indicate that the second terminal performs a connection state related operation.

In this embodiment of this application, the first terminal receives the fourth information from the second terminal; sends the fourth information as the first information to the radio access network side device, or generates the first information based on the NAS security parameter of the first terminal and the fourth information and sends the first information to the radio access network side device; and then sends, to the second terminal based on the second information returned by the radio access network side device, sixth information used for indicating the second terminal to execute the connection state related operation. In this way, a terminal (for example, a remote terminal) is also enabled, in a relay scenario, to establish a connection with only a radio access network side device.

Referring to FIG. 2, an embodiment of this application provides a connection establishment method. The method is applied to a second terminal and includes the following step:
Step 201: Send fourth information to a first terminal in a case that there are no valid AS security parameters, where the fourth information is used to obtain an indication of a connection state operation via the first terminal.

In this embodiment of this application, referring to a scenario shown in FIG. 1b, the first terminal is a relay terminal of the second terminal, that is, the first terminal is relay UE, and the second terminal is remote UE.

The case that there are no valid AS security parameters may be the following case: The second terminal requests, via the first terminal, an RRC connection from the radio access network side device, the radio access network side device agrees to establish the RRC connection, and the second terminal enters a connected state from an idle state, but AS security has not been activated.

As an example, the first terminal may carry the fourth information via an RRCSetupComplete message, and send the fourth information from the second terminal to the radio access network side device.

In some implementations, a core network management state of the second terminal is an idle state. In this method, the connection without the core network side device can be implemented locally.

In some implementations, the fourth information is generated based on a NAS security parameter of the second terminal. In this case, the second terminal may send the fourth information to the radio access network side device via the first terminal (it may be understood that, the following may be determined with reference to the description of the first terminal side method: the first terminal may send the fourth information as the first information to the radio access network side device, or generate the first information based on the NAS security parameter of the first terminal and the fourth information and send the first information to the radio access network side device); then, the radio access network side device sends the fourth information to the core network side device (for example, the radio access network device sends the fourth information to a core network device of the second terminal); and the core network side device verifies the second terminal based on the fourth information.

It should be further noted that, the first information may be generated based on the NAS security parameter of the first terminal and the fourth information. In this case, as an example, after receiving the first information, the radio access network side device sends the fourth information included in the first information to the core network device of the second terminal, and the core network device of the second terminal verifies the second terminal based on the fourth information; or the radio access network side device sends information in the first information other than the fourth information to a core network device of the first terminal, and the core network device of the first terminal verifies the first terminal based on the received information. It should be noted that the core network device of the second terminal and the core network device of the first terminal may be a same core network device, or may be different core network devices.

Further, after the sending fourth information to a first terminal, the method further includes: receiving sixth information sent by the first terminal; and performing a connection state related operation based on the sixth information.

In this embodiment of this application, the performing a connection state related operation includes at least one of the following:
(1) entering a wirelessly inter-device disconnected state, or releasing a wireless inter-device connection, where as an example, the wirelessly disconnected state may be an idle state;
(2) switching to or maintaining a wirelessly inter-device connected state, or maintaining a wireless inter-device connection; and
(3) switching to a core network connected state, or performing a core network-connection establishment process.

Optionally, in some implementations, the default operation is performed if the second terminal does not receive the sixth information within the time specified in the protocol or configured by the network.

In this embodiment of this application, the default operation includes any one of the following:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

As an example, the inter-device connection may be a PC5 connection. For example, the releasing a wireless inter-device connection may be understood as releasing an inter-device PC5 connection; and the maintaining a wireless inter-device connection may be understood as maintaining an inter-device PC5 connection.

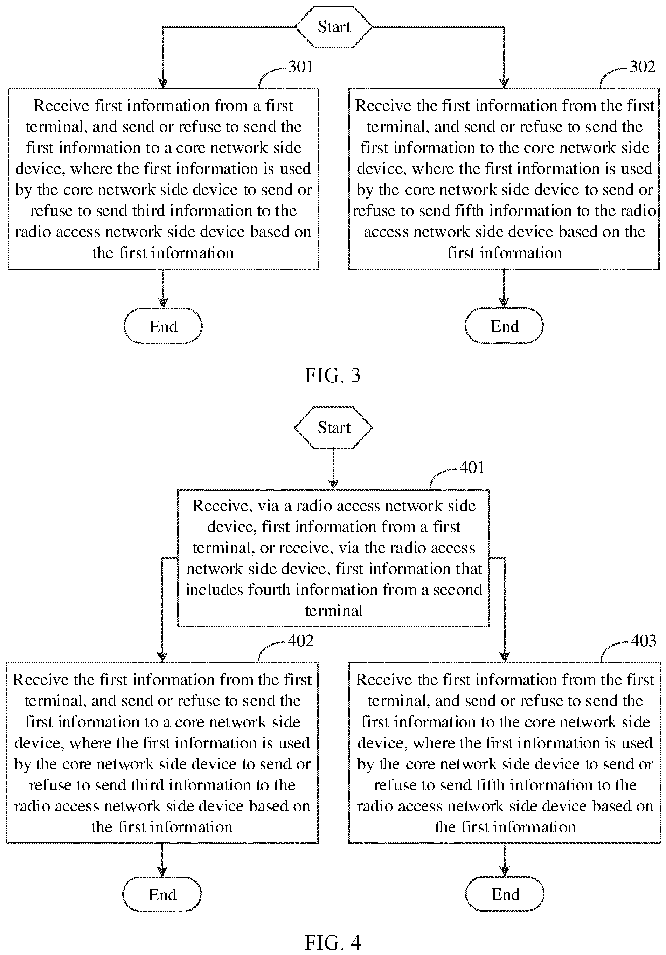

Referring to FIG. 3, an embodiment of this application provides a connection establishment method. The method is applied to a radio access network side device and includes at least one of the following steps:
Step 301: Receive first information from a first terminal, and send or refuse to send the first information to a core network side device, where the first information is used by the core network side device to send or refuse to send third information to the radio access network side device based on the first information.
Step 302: Receive the first information from the first terminal, and send or refuse to send the first information to the core network side device, where the first information is used by the core network side device to send or refuse to send fifth information to the radio access network side device based on the first information.

It should be noted that, the following may be learned from the foregoing descriptions of the procedure of the first terminal side method and the procedure of the second terminal side method: The method in this embodiment of this application may also be establishing a connection in a relay scenario. The foregoing step 301 is an execution procedure for a radio access network side device in a non-relay scenario; and the foregoing step 302 is an execution procedure for a radio access network side device in a relay scenario.

In this embodiment of this application, after receiving the first information from the first terminal, the radio access network side device may choose to send the first information to the core network side device, or may refuse to send the first information, that is, determine not to send the first information to the core network side device.

In some implementations, the first information is non-NAS information. For example, the first information is AS information. In this method, the first terminal is enabled to be not connected to the core network side device via a signaling process.

Further, in some implementations, the method further includes:
receiving the third information sent by the core network side device, and/or receiving the fifth information sent by the core network side device, and sending second information to the first terminal based on the third information and/or the fifth information, where the second information is used for indicating a connection state operation.

In this embodiment of this application, the foregoing core network side device includes the core network side device of the first terminal and the core network side device of the second terminal, and the two core network side devices may be the same or different. In an actual implementation process, the radio access network side device may receive only the third information from the core network side device, receive only the fifth information from the core network side device, or receive both the third information and the fifth information from the core network side device. The radio access network side device sends, to the first terminal based on the third information and/or the fifth information, the second information for indicating the connection state operation.

Specifically,
if the radio access network side device receives the third information from the core network side device, and the third information indicates that the first terminal enters a wirelessly disconnected state or releases a wireless connection, the radio access network side device determines the second terminal based on the third information, and sends the second information to the first terminal, where the second information indicates that the first terminal enters the wirelessly disconnected state or releases the wireless connection;
if the radio access network side device receives the third information from the core network side device, and the third information indicates that the first terminal switches to or maintains a wirelessly connected state or maintains a wireless connection, the radio access network side device determines the second terminal based on the third information, and sends the second information to the first terminal, where the second information indicates that the first terminal switches to or maintains the wirelessly connected state or maintains the wireless connection; and
if the radio access network side device receives the third information from the core network side device, and the third information indicates that the first terminal switches to a core network connected state or to execute a core network-connection establishment process, the radio access network side device determines the second terminal based on the third information, and sends the second information to the first terminal, where the second information indicates that the first terminal switches to the core network connected state or to execute the core network-connection establishment process.

A process in which the radio access network side device sends the second terminal to the first terminal based on the fifth information is similar to the process of sending the second information to the first terminal based on the third information. Details are not described again.

It should be noted that, if the radio access network side device receives the third information and the fifth information, the second information needs to be sent based on the third information and the fifth information. As an example, if the third information indicates that the first terminal switches to or maintains the wirelessly connected state, and the fifth information indicates that the first terminal enters the wirelessly disconnected state or releases the wireless connection, the radio access network side device sends the second information, where the second information indicates that the first terminal enters the wirelessly disconnected state or releases the wireless connection. As another example, if the third information indicates that the first terminal switches to or maintains the wirelessly connected state, and the fifth information indicates that the first terminal switches to or maintains the wirelessly connected state, the radio access network side device sends the second information, where the second information indicates that the first terminal switches to or maintains the wirelessly connected state or maintains the wireless connection.

Optionally, in some implementations, the default operation is performed if the radio access network side device does not receive the third information and/or the fifth information within the time specified in the protocol or configured by the network.

As an example, the radio access network side device starts a second timer when starting to send the first information to the core network side device, when finishing sending the first information to the core network side device, or after sending the first information to the core network side device, where duration of the second timer may be specified in the protocol or configured by the network.

The second timer is stopped if the third information and/or the fifth information is received in a running period of the second timer.

The default operation is performed when the second timer expires.

As another example, the radio access network side device starts a third timer when starting to send the first information to the core network side device, when finishing sending the first information to the core network side device, or after sending the first information to the core network side device, where duration of the third timer may be specified in the protocol or configured by the network.

The third timer is stopped if the third information and/or the fifth information are/is received in a running period of the third timer.

The radio access network device sends the second information based on the received third information and/or fifth information when the third timer has not expired. The default operation is performed if the radio access network side device has not received the third information and/or the fifth information when the first timer expires.

In some implementations, the default operation includes: sending or refusing to send second information to the first terminal, where the second information is used to indicate a connection state operation.

Optionally, in some implementations, after the receiving first information from a first terminal, and sending or refusing to send the first information to a core network side device, the method further includes: sending second information to the first terminal, where the second information is used for indicating a connection state operation.

In this embodiment of this application, after sending the first information to the core network side device, the radio access network side device may directly send, to the first terminal, the second information for indicating the connection state operation, that is, the radio access network side device does not need to receive the third information and/or the fifth information from the core network side device.

In another example, the radio access network side device may refuse to send the first information to the core network side device. In this case, the radio access network side device may send the second information to a terminal device, or may not send the second information to the first terminal. In a case that the radio access network side device sends the second information to the first terminal, as an example, the radio access network side device sends the second information in a case that the radio access network side device does not support the first terminal in establishing only a wireless connection (for example, an air interface-based wireless connection or an RRC connection), where the second information indicates a release operation, for example, the second information indicates a core network-connection operation (for example, indicates a core network-connection operation of the first terminal). As another example, the radio access network side device sends the second information in a case that the radio access network side device supports the terminal device in establishing only a wireless connection (for example, an air interface-based wireless connection or an RRC connection), where the second information indicates a connection operation.

Further, the second information may specifically include at least one of the following:
(1) an indication of a release operation, for example, when the second information indicates the release operation, a terminal device switches to or enters a wirelessly disconnected state, or releases a wireless connection;
(2) an indication of a connection operation, for example, when the second information indicates the connection operation, a terminal device switches to or maintains a wirelessly connected state, or maintains a wireless connection;
(3) an indication of a core network-connection operation of the first terminal, for example, when the second information indicates the core network-connection operation of the first terminal, a terminal device switches to a core network connected state, or executes a core network-connection establishment process;
(4) an indication of a release operation of an inter-device connection, for example, when the second information indicates the release operation of the inter-device connection, a terminal (for example, the second terminal) enters a wirelessly inter-device disconnected state, or releases a wireless inter-device connection;
(5) an indication of a connection operation of an inter-device connection, for example, when the second information indicates the connection operation of the inter-device connection, a terminal (for example, the second terminal) switches to or maintains a wirelessly inter-device connected state, or maintains a wireless inter-device connection; and
(6) an indication of a core network-connection operation of a second terminal. For example, when the second information indicates the core network-connection operation of the second terminal, a terminal (for example, the second terminal) switches to a core network connected state, or executes a core network-connection establishment process.

Optionally, the radio access network side device may provide radio bearer configuration information for the terminal. The radio bearer configuration information may be used to receive multicast service data. For example, if the terminal (for example, the first terminal) maintains a connection state with a base station, the base station provides the radio bearer configuration information for the terminal, For example, if the radio bearer configuration information is configuration information of a data radio bearer (Data Radio Bearer, DRB), the configuration information may be used to receive multicast service data.

Referring to FIG. 4, an embodiment of this application provides a connection establishment method. The method is applied to a core network side device and includes the following steps:
Step 401: Receive, via a radio access network side device, first information from a first terminal, or receive, via the radio access network side device, first information including fourth information from a second terminal; and perform step 402 if the first information from the first terminal is received, or perform step 403 if the first information including the fourth information from the second terminal is received.
Step 402: Send or refuse to send third information to the radio access network side device based on the first information, where the third information is used by the radio access network side device to send second information to the first terminal based on the third information.
Step 403: Send or refuse to send fifth information to the radio access network side device based on the fourth information, where the fifth information is used by the radio access network side device to send second information to the first terminal based on the fifth information.

In this embodiment of this application, the following may be learned from the foregoing descriptions of the procedure of the first terminal side method and the procedure of the second terminal side method: The method in this embodiment of this application may also be establishing a connection in a relay scenario. The foregoing steps 401 and 402 are an execution procedure for a radio access network side device in a non-relay scenario; and the foregoing steps 401 and 403 are an execution procedure for a radio access network side device in a relay scenario. It may be understood that the first information including the fourth information from the second terminal means that the first terminal may send the fourth information as the first information to the radio access network side device, or generate the first information based on the NAS security parameter of the first terminal and the fourth information and send the first information to the radio access network side device; and then the radio access network side device sends the first information to the core network side device.

In some implementations, the first information is non-NAS information, and the fourth information is non-NAS information. In other words, the first terminal and the second terminal are enabled to be not connected to the core network side device via a signaling process.

In some implementations, a core network management state of the first terminal is an idle state, and/or a core network management state of the second terminal is an idle state. In other words, the first terminal and the second terminal are enabled to be not connected to the core network side device locally.

Further, after step 402, the method further includes: verifying the first information based on a NAS security parameter of the first terminal, or verifying the first information based on the NAS security parameter of the first terminal and a NAS security parameter of the second terminal, and sending or refusing to send the third information according to a verification result.

Alternatively, after step 403, the method further includes: verifying the fourth information based on the NAS security parameter of the second terminal, and sending or refusing to send the fifth information according to a verification result.

In this embodiment of this application, the first terminal and/or the second terminal are authenticated via the core network side device. Specifically:
if the third information is sent to the radio access network side device when the core network side device fails to verify the first terminal, the third information indicates that the first terminal enters the wirelessly disconnected state or releases the wireless connection;
if the third information is sent to the radio access network side device when the core network side device succeeds in verifying the first terminal, the third information indicates that the first terminal switches to or maintains the wirelessly connected state or maintains the wireless connection; and
if the third information is sent to the radio access network side device when the core network side device succeeds in verifying the first terminal, the third information indicates that the first terminal switches to the core network connected state or to execute the core network-connection establishment process.

Verifying of the second terminal is similar to the foregoing verifying of the first terminal. Details are not described again.

It should be noted that, the connection establishment method provided in this embodiment of this application may be performed by a connection establishment apparatus, or by a control module that is in the connection establishment apparatus and that is configured to perform the connection establishment method. In this embodiment of this application, that a connection establishment apparatus performs the connection establishment method is used as an example to describe a connection establishment apparatus provided in an embodiment of this application.

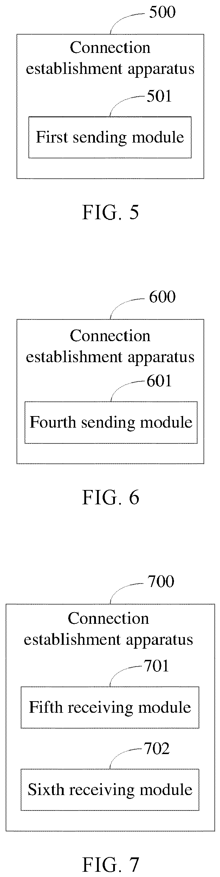

Referring to FIG. 5, an embodiment of this application provides a connection establishment apparatus 500. The apparatus 500 is applied to a first terminal and includes:
a first sending module 501, configured to send first information to a radio access network side device in a case that there are no valid AS security parameters.

The first information is used to obtain an indication of a connection state operation via the radio access network side device.

In some implementations, the first information is non-NAS information.

In some implementations, a core network management state of the first terminal is an idle state.

In some implementations, the first information is generated based on a NAS security parameter of the first terminal.

In some implementations, the apparatus further includes:
a first receiving module, configured to receive second information sent by the radio access network side device; and
a first execution module, configured to perform a connection state related operation based on the second information.

In some implementations, the first execution module is further configured to perform at least one of the following steps:
entering a wirelessly disconnected state, or releasing a wireless connection;
switching to or maintaining a wirelessly connected state, or maintaining a wireless connection; and
switching to a core network connected state, or performing a core network-connection establishment process.

In some implementations, the apparatus further includes:
a second execution module, configured to perform a default operation in a case that second information is not received within time specified in a protocol or configured by a network.

In some implementations, the default operation includes one of the following:
switching to or maintaining a wirelessly connected state;
switching to or maintaining a wirelessly connected state, or maintaining a wireless connection; and
switching to a core network connected state, or performing a core network-connection establishment process.

In some implementations, the apparatus further includes:
a second receiving module, configured to receive fourth information sent by a second terminal; and
a second sending module, configured to send the first information to the radio access network side device.

In some implementations, the first information is the fourth information, or the first information is generated based on a NAS security parameter of the first terminal and the fourth information.

In some implementations, the apparatus further includes:
a third receiving module, configured to receive second information sent by the radio access network side device; and
a third sending module, configured to send sixth information to the second terminal based on the second information, where
the sixth information is used to indicate that the second terminal performs a connection state related operation.

In some implementations, the fourth information is generated based on a NAS security parameter of the second terminal.

Referring to FIG. 6, an embodiment of this application provides a connection establishment apparatus 600. The apparatus 600 is applied to a second terminal and includes:
a fourth sending module 601, configured to send fourth information to a first terminal in a case that there are no valid AS security parameters.

The fourth information is used to obtain an indication of a connection state operation via the first terminal.

In some implementations, a core network management state of the second terminal is an idle state.

In some implementations, the fourth information is generated based on a NAS security parameter of the second terminal.

In some implementations, the apparatus further includes:
a fourth receiving module, configured to receive sixth information sent by the first terminal; and
a third execution module, configured to perform a connection state related operation based on the sixth information.

In some implementations, the third execution module is further configured to perform at least one of the following steps:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

In some implementations, the apparatus further includes:
a fourth execution module, configured to perform a default operation in a case that sixth information is not received within time specified in a protocol or configured by a network.

In some implementations, the default operation includes any one of the following:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

Referring to FIG. 7, an embodiment of this application provides a connection establishment apparatus 700. The apparatus 700 is applied to a radio access network side device and includes:
a fifth receiving module 701, configured to: receive first information from a first terminal, and send or refuse to send the first information to a core network side device, where the first information is used by the core network side device to send or refuse to send third information to the radio access network side device based on the first information; and
a sixth receiving module 702, configured to: receive the first information from the first terminal, and send or refuse to send the first information to the core network side device, where the first information is used by the core network side device to send or refuse to send fifth information to the radio access network side device based on the first information.

In some implementations, the apparatus further includes:
a fifth sending module, configured to send second information to the first terminal, where the second information is used for indicating a connection state operation.

In some implementations, the first information is non-NAS information.

In some implementations, the apparatus further includes:
a seventh receiving module, configured to: receive the third information sent by the core network side device, and/or receive the fifth information sent by the core network side device; and
a sixth sending module, configured to send second information to the first terminal based on the third information and/or the fifth information, where the second information is used for indicating a connection state operation.

In some implementations, the apparatus further includes:
a fifth execution module, configured to perform a default operation in a case that the third information and/or the fifth information are/is not received within time specified in a protocol or configured by a network.

In some implementations, the default operation includes: sending or refusing to send second information to the first terminal, where the second information is used to indicate a connection state operation.

In some implementations, the second information includes at least one of the following:
an indication of a release operation, for example, when the second information indicates the release operation, a terminal device switches to or enters a wirelessly disconnected state, or releases a wireless connection, and as an example, the second information may be an RRCRelease message;
an indication of a connection operation, for example, when the second information indicates the connection operation, a terminal device switches to or maintains a wirelessly connected state, or maintains a wireless connection; and
an indication of a core network-connection operation of the first terminal, for example, when the second information indicates the core network-connection operation of the first terminal, a terminal device switches to a core network connected state, or executes a core network-connection establishment process;
an indication of a release operation of an inter-device connection, for example, when the second information indicates the release operation of the inter-device connection, a terminal (for example, the second terminal) enters a wirelessly inter-device disconnected state, or releases a wireless inter-device connection;
an indication of a connection operation of an inter-device connection, for example, when the second information indicates the connection operation of the inter-device connection, a terminal (for example, the second terminal) switches to or maintains a wirelessly inter-device connected state, or maintains a wireless inter-device connection; and
an indication of a core network-connection operation of a second terminal, for example, when the second information indicates the core network-connection operation of the second terminal, a terminal (for example, the second terminal) switches to a core network connected state, or executes a core network-connection establishment process.

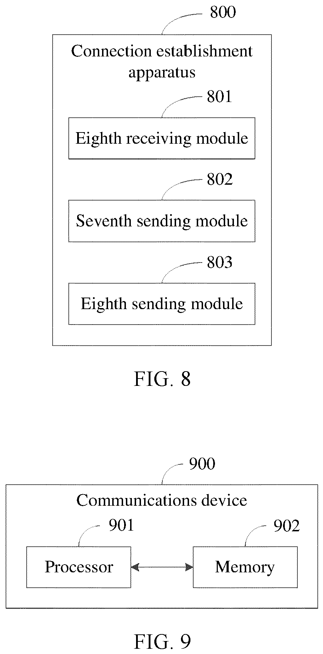

Referring to FIG. 8, an embodiment of this application provides a connection establishment apparatus 800. The apparatus is applied to a core network side device and includes:
an eighth receiving module 801, configured to: receive, via a radio access network side device, first information from a first terminal, or receive, via the radio access network side device, first information including fourth information from a second terminal; and
a seventh sending module 802, configured to: send or refuse to send third information to the radio access network side device based on the first information, where the third information is used by the radio access network side device to send second information to the first terminal based on the third information; or
an eighth sending module 803, configured to: send or refuse to send fifth information to the radio access network side device based on the fourth information, where the fifth information is used by the radio access network side device to send second information to the first terminal based on the fifth information.

In some implementations, the first information is non-NAS information, and the fourth information is non-NAS information.

In some implementations, a core network management state of the first terminal is an idle state, and/or a core network management state of the second terminal is an idle state.

In some implementations, the apparatus further includes:
a first verifying module, configured to: verify the first information based on a NAS security parameter of the first terminal, or verify the first information based on the NAS security parameter of the first terminal and a NAS security parameter of the second terminal; and
a ninth sending module, configured to send or refuse to send the third information according to a verification result; or
a second verifying module, configured to verify the fourth information based on a NAS security parameter of the second terminal; and
a tenth sending module, configured to send or refuse to send the fifth information according to a verification result.

According to the embodiments of this application, after establishing a connection with a radio access network side device, a terminal sends first information to the radio access network side device, and obtains a connection state operation via the radio access network side device. In this way, the terminal is enabled to establish a connection with only the radio access network side device, without being connected to a core network side device all the time.

The connection establishment apparatus in this embodiment of this application may be an apparatus, or may be a component, an integrated circuit, or a chip in a terminal. The apparatus may be a mobile terminal, or a non-mobile terminal. For example, the mobile terminal may include but is not limited to the types of the terminal enumerated above; and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

The connection establishment apparatus in the embodiments of this application may be an apparatus with an operating system. The operating system may be an Android (Android) operating system, an iOS operating system, or another possible operating system, which is not specifically limited in this embodiment of this application.

The connection establishment apparatus provided in this embodiment of this application can implement the processes implemented in the method embodiments in FIG. 1 to FIG. 4, with the same technical effects achieved. To avoid repetition, details are not described herein again.

Optionally, as shown in FIG. 9, an embodiment of this application further provides a communications device 900, including a processor 901, a memory 902, and a program or instructions stored in the memory 902 and executable on the processor 901. For example, in a case that the communications device 900 is a first terminal, when the program or instructions are executed by the processor 901, the processes of the embodiments of the connection establishment method applied to the first terminal and the second terminal are implemented, with the same technical effects achieved. In a case that the communications device 900 is a radio access network side device, when the program or instructions are executed by the processor 901, the processes of the foregoing embodiments of the connection establishment method applied to the radio access network side device are implemented, with the same technical effects achieved. In a case that the communications device 900 is a core network side device, when the program or instructions are executed by the processor 901, the processes of the foregoing embodiments of the connection establishment method applied to the core network side device are implemented, with the same technical effects achieved. To avoid repetition, details are not described herein again.

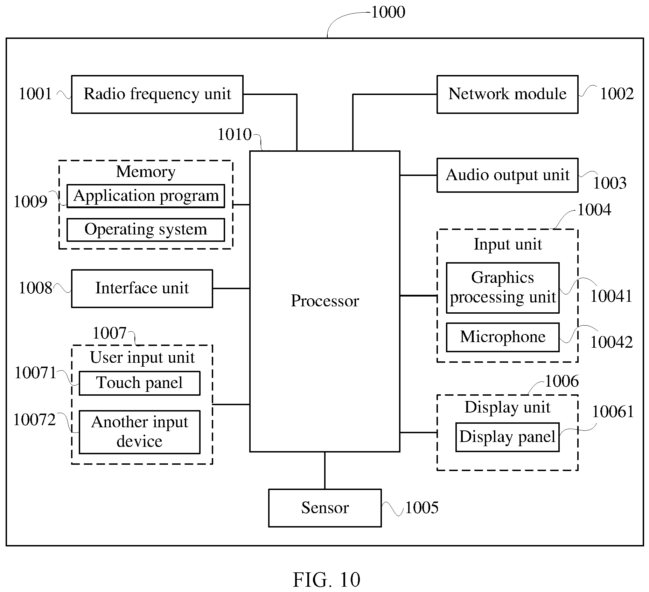

FIG. 10 is a schematic structural diagram of hardware of a terminal according to an embodiment of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (for example, a battery) supplying power to the components. The power supply may be logically connected to the processor 1010 through a power management system. In this way, functions such as charge management, discharge management, and power consumption management are implemented through the power management system. The structure of the terminal shown in FIG. 10 does not constitute a limitation on the terminal. The terminal may include more or fewer components than those shown in the figure, or some components may be combined, or there may be a different component arrangement. Details are not described herein.

It should be understood that in this embodiment of this application, the input unit 1004 may include a graphics processing unit (Graphics Processing Unit, GPU) 10041 and a microphone 10042, and the graphics processing unit 10041 processes image data of a static image or a video obtained by an image capture apparatus (for example, a camera) in a video capture mode or an image capture mode. The display unit 1006 may include a display panel 10061. The display panel 10061 may be configured in a form of a liquid crystal display, an organic light-emitting diode, or the like. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional key (for example, a volume control key or a power on/off key), a trackball, a mouse, and a joystick. Details are not described herein.

In this embodiment of this application, the radio frequency unit 1001 receives downlink data from the radio access network side device, and transmits the downlink data to the processor 1010 for processing; and in addition, transmits uplink data to the radio access network side device. Generally, the radio frequency unit 1001 includes but is not limited to an antenna, at least one amplifier, a transceiver, a coupler, a low noise amplifier, and a duplexer, and the like.

The memory 1009 may be configured to store a software program or instructions and various data. The memory 1009 may mainly include a program or instruction storage area and a data storage area. The program or instruction storage area may store an operating system, an application program or instruction required by at least one function (for example, a sound play function or an image display function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1010 may include one or more processing units. Optionally, the processor 1010 may integrate an application processor with a modem processor. The application processor mainly processes the operating system, a user interface, the application program or instruction, and the like. The modem processor mainly processes wireless communication, for example, is a baseband processor. It may be understood that, alternatively, the modem processor may not be integrated into the processor 1010.

The radio frequency unit 1000 is configured to send first information to a radio access network side device in a case that there are no valid AS security parameters.

The first information is used to obtain an indication of a connection state operation via the radio access network side device.

According to the embodiments of this application, after establishing a connection with a radio access network side device, a first terminal sends first information to the radio access network side device, and obtains a connection state operation via the radio access network side device. In this way, the first terminal is enabled to establish a connection with only the radio access network side device, without being connected to a core network side device all the time.

Optionally, the first information is non-NAS information.

Optionally, a core network management state of the first terminal is an idle state.

Optionally, the first information is generated based on a NAS security parameter of the first terminal.

Optionally, the radio frequency unit 1000 is configured to receive second information sent by the radio access network side device.

The processor 1010 is configured to perform a connection state related operation based on the second information.

Optionally, the processor 1010 is configured to perform at least one of the following steps:
entering a wirelessly disconnected state, or releasing a wireless connection;
switching to or maintaining a wirelessly connected state, or maintaining a wireless connection; and
switching to a core network connected state, or performing a core network-connection establishment process.

Optionally, the processor 1010 is configured to:
performing a default operation in a case that second information is not received within time specified in a protocol or configured by a network.

Optionally, the default operation includes one of the following:
switching to or maintaining a wirelessly connected state;
switching to or maintaining a wirelessly connected state, or maintaining a wireless connection; and
switching to a core network connected state, or performing a core network-connection establishment process.

Optionally, the radio frequency unit 1000 is configured to receive fourth information sent by a second terminal.

The processor 1010 is configured to send the first information to the radio access network side device.

Optionally, the first information is the fourth information, or the first information is generated based on a NAS security parameter of the first terminal and the fourth information.

Optionally, the radio frequency unit 1000 is configured to receive second information sent by the radio access network side device.

The radio frequency unit 1000 is configured to send sixth information to the second terminal based on the second information.

The sixth information is used to indicate that the second terminal performs a connection state related operation.

Optionally, the fourth information is generated based on a NAS security parameter of the second terminal.

In some implementations, the radio frequency unit 1000 is configured to send fourth information to a first terminal in a case that there are no valid AS security parameters.

The fourth information is used to obtain an indication of a connection state operation via the first terminal.

Optionally, a core network management state of the second terminal is an idle state.

Optionally, the fourth information is generated based on a NAS security parameter of the second terminal.

Optionally, the radio frequency unit 1000 is configured to receive sixth information sent by the first terminal.

The processor 1010 is configured to perform a connection state related operation based on the sixth information.

Optionally, the processor 1010 is configured to perform at least one of the following steps:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

Optionally, the processor 1010 is configured to:
perform a default operation in a case that sixth information is not received within time specified in a protocol or configured by a network.

Optionally, the default operation includes any one of the following:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

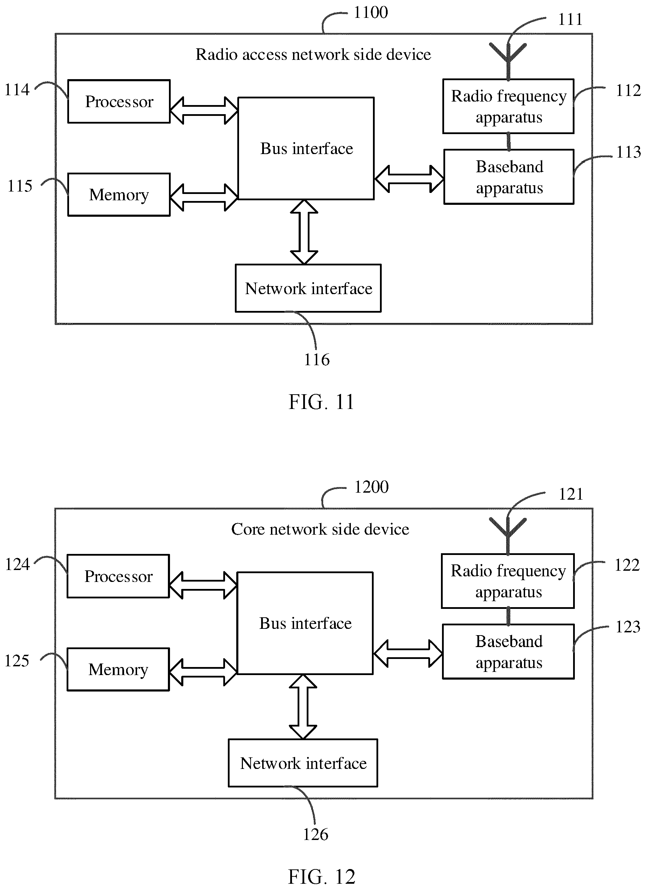

Specifically, an embodiment of this application further provides a radio access network side device. As shown in FIG. 11, the radio access network side device 1100 includes an antenna 111, a radio frequency apparatus 112, and a baseband apparatus 113. The antenna 111 is connected to the radio frequency apparatus 112. In an uplink direction, the radio frequency apparatus 112 receives information through the antenna 111, and sends the received information to the baseband apparatus 113 for processing. In a downlink direction, the baseband apparatus 113 processes to-be-sent information, and sends the to-be-sent information to the radio frequency apparatus 112. After processing the received information, the radio frequency apparatus 112 sends the information through the antenna 111.

The radio frequency apparatus 112 may be located in the baseband apparatus 113, and the method performed by the radio access network side device in the foregoing embodiment may be implemented in the baseband apparatus 113. The baseband apparatus 113 includes a processor 114 and a memory 115.

The baseband apparatus 113 may include, for example, at least one baseband board. A plurality of chips are disposed on the baseband board. As shown in FIG. 11, one of the chips is, for example, the processor 114, which is connected to the memory 115, so as to invoke a program in the memory 115 to perform operations of the network device shown in the foregoing method embodiments.

The baseband apparatus 113 may further include a network interface 116, configured to exchange information with the radio frequency apparatus 112. The interface is, for example, a common public radio interface (common public radio interface, CPRI).

Specifically, the radio access network side device in this embodiment of the present disclosure further includes a program or instructions stored in the memory 115 and executable on the processor 114. The processor 114 invokes the program or instructions in the memory 115 to perform the method performed by the modules shown in FIG. 7, with the same technical effects achieved. To avoid repetition, details are not described herein again.

Specifically, an embodiment of this application further provides a core network side device. As shown in FIG. 12, the core network side device 1200 includes an antenna 121, a radio frequency apparatus 122, and a baseband apparatus 123. The antenna 121 is connected to the radio frequency apparatus 122. In an uplink direction, the radio frequency apparatus 122 receives information through the antenna 121, and sends the received information to the baseband apparatus 123 for processing. In a downlink direction, the baseband apparatus 123 processes to-be-sent information, and sends the to-be-sent information to the radio frequency apparatus 122. After processing the received information, the radio frequency apparatus 122 sends the information through the antenna 121.

The foregoing band processing apparatus may be located in the baseband apparatus 123, and the method performed by the radio access network side device in the foregoing embodiment may be implemented in the baseband apparatus 123. The baseband apparatus 123 includes a processor 124 and a memory 125.

The baseband apparatus 123 may include, for example, at least one baseband board. A plurality of chips are disposed on the baseband board. As shown in FIG. 12, one of the chips is, for example, the processor 124, which is connected to the memory 125, so as to invoke a program in the memory 125 to perform operations of the network device shown in the foregoing method embodiments.

The baseband apparatus 123 may further include a network interface 126, configured to exchange information with the radio frequency apparatus 122. The interface is, for example, a common public radio interface (common public radio interface, CPRI).

Specifically, the radio access network side device in this embodiment of the present invention further includes a program or instructions stored in the memory 125 and executable on the processor 124. The processor 124 invokes the program or instructions in the memory 125 to perform the method performed by the modules shown in FIG. 8, with the same technical effects achieved. To avoid repetition, details are not described herein again.

An embodiment of this application further provides a readable storage medium. The readable storage medium stores a program or instructions, and when the program or instructions are executed by a processor, the processes of the foregoing embodiments of the connection establishment method are implemented, with the same technical effects achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to: execute a program or instructions of a terminal to implement the processes of the foregoing embodiments of the connection establishment method, execute a program or instructions of a radio access network side device to implement the processes of the foregoing embodiments of the connection establishment method, or execute a program or instructions of a core network side device to implement the processes of the foregoing embodiments of the connection establishment method, with the same technical effects achieved. To avoid repetition, details are not described herein again.

It should be understood that the chip mentioned in the embodiments of this application may also be referred to as a system-level chip, a system chip, a chip system, or a system-on-a-chip.

An embodiment of this application further provides a computer program product. The computer program product is stored in a non-volatile storage medium, and configured to: be executed by at least one processor to implement the method according to the first aspect or the processes of the foregoing embodiments of the connection establishment method, execute a program or instructions of a radio access network side device to implement the processes of the foregoing embodiments of the connection establishment method, or execute a program or instructions of a core network side device to implement the processes of the foregoing embodiments of the connection establishment method, with the same technical effects achieved. To avoid repetition, details are not described herein again.

It may be understood that the embodiments described in the present disclosure can be implemented by hardware, software, firmware, middleware, microcode, or a combination thereof. For implementation with hardware, modules, units, sub-modules, sub-units, and the like may be implemented in one or more application specific integrated circuits (Application Specific Integrated Circuit, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a micro-controller, a micro-processor, another electronic unit for implementing the functions of this application, or a combination thereof.

It should be noted that, in this specification, the terms "include", "comprise", or any of their variants are intended to cover a non-exclusive inclusion, so that a process, a method, an article, or an apparatus that includes a series of elements includes not only those elements but also other elements that are not expressly listed, or further includes elements inherent to such a process, method, article, or apparatus. In the absence of more restrictions, an element defined by "including a ..." does not exclude another same element in a process, method, article, or apparatus that includes the element. In addition, it should be noted that the scope of the methods and apparatuses in the embodiments of this application is not limited to performing functions in the order shown or discussed, but may also include performing the functions substantially concurrently or in the reverse order depending on the functions involved. For example, the described methods can be performed in an order different from that described, and various steps can be added, omitted, or combined. In addition, features described with reference to some examples may be combined in other examples.

Based on the descriptions of the foregoing implementations, those skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in the form of a software product. The computer software product is stored in a storage medium (such as a ROM/RAM, a magnetic disk, or an optical disc), and includes several instructions for indicating that a terminal (which may be a mobile phone, a computer, a server, an air conditioner, a network device, or the like) performs the methods described in the embodiments of this application.

The embodiments of this application are described above with reference to the accompanying drawings, but this application is not limited to the foregoing specific implementations. The foregoing specific implementations are merely illustrative instead of restrictive. Under the enlightenment of this application, persons of ordinary skills in the art may make many forms without departing from the essence of this application and the scope of protection of claims, all of which fall within the protection of this application.

## Claims

1. A connection establishment method, applied to a first terminal and comprising:
sending first information to a radio access network side device in a case that there are no valid access stratum AS security parameters; wherein
the first information is used to obtain an indication of a connection state operation via the radio access network side device.

2. The method according to claim 1, wherein the first information is non-access stratum NAS information.

3. The method according to claim 1, wherein a core network management state of the first terminal is an idle state.

4. The method according to claim 1, wherein the first information is generated based on a NAS security parameter of the first terminal.

5. The method according to claim 1, wherein after the sending first information to a radio access network side device, the method further comprises:
receiving second information sent by the radio access network side device; and
performing a connection state related operation based on the second information.

6. The method according to claim 5, wherein the performing a connection state related operation based on the second information comprises at least one of following:
entering a wirelessly disconnected state, or releasing a wireless connection;
switching to or maintaining a wirelessly connected state, or maintaining a wireless connection; and
switching to a core network connected state, or performing a core network-connection establishment process.

7. The method according to claim 1, wherein after the sending first information to a radio access network side device, the method further comprises:
performing a default operation in a case that second information is not received within time specified in a protocol or configured by a network.

8. The method according to claim 7, wherein the default operation comprises one of following:
entering a wirelessly disconnected state, or releasing a wireless connection;
switching to or maintaining a wirelessly connected state, or maintaining a wireless connection; and
switching to a core network connected state, or performing a core network-connection establishment process.

9. The method according to claim 1, further comprising:
receiving fourth information sent by a second terminal; and
sending the first information to the radio access network side device.

10. The method according to claim 9, wherein the first information is the fourth information, or the first information is generated based on a NAS security parameter of the first terminal and the fourth information.

11. The method according to claim 9, wherein after the sending first information to a radio access network side device, the method further comprises:
receiving second information sent by the radio access network side device; and
sending sixth information to the second terminal based on the second information; wherein
the sixth information is used to indicate that the second terminal performs a connection state related operation.

12. The method according to claim 9, wherein the fourth information is generated based on a NAS security parameter of the second terminal.

13. A connection establishment apparatus, applied to a first terminal and comprising:
a first sending module, configured to send first information to a radio access network side device in a case that there are no valid access stratum AS security parameters; wherein
the first information is used to obtain an indication of a connection state operation via the radio access network side device.

14. The apparatus according to claim 13, wherein the first information is non-NAS information.

15. The apparatus according to claim 13, wherein a core network management state of the first terminal is an idle state.

16. The apparatus according to claim 13, wherein the first information is generated based on a NAS security parameter of the first terminal.

17. The apparatus according to claim 13, further comprising:
a first receiving module, configured to receive second information sent by the radio access network side device; and
a first execution module, configured to perform a connection state related operation based on the second information.

18. The apparatus according to claim 17, wherein the first execution module is further configured to perform at least one of following steps:
entering a wirelessly disconnected state, or releasing a wireless connection;
switching to or maintaining a wirelessly connected state, or maintaining a wireless connection; and
switching to a core network connected state, or performing a core network-connection establishment process.

19. The apparatus according to claim 13, further comprising:
a second execution module, configured to perform a default operation in a case that second information is not received within time specified in a protocol or configured by a network.

20. The apparatus according to claim 19, wherein the default operation comprises one of following:
entering a wirelessly disconnected state, or releasing a wireless connection;
switching to or maintaining a wirelessly connected state, or maintaining a wireless connection; and
switching to a core network connected state, or performing a core network-connection establishment process.

21. The apparatus according to claim 13, further comprising:
a second receiving module, configured to receive fourth information sent by a second terminal; and
a second sending module, configured to send the first information to the radio access network side device.

22. The apparatus according to claim 21, wherein the first information is the fourth information, or the first information is generated based on a NAS security parameter of the first terminal and the fourth information.

23. The apparatus according to claim 21, further comprising:
a third receiving module, configured to receive second information sent by the radio access network side device; and
a third sending module, configured to send sixth information to the second terminal based on the second information; wherein
the sixth information is used to indicate that the second terminal performs a connection state related operation.

24. The apparatus according to claim 21, wherein the fourth information is generated based on a NAS security parameter of the second terminal.

25. A connection establishment method, applied to a second terminal and comprising:
sending fourth information to a first terminal in a case that there are no valid access stratum AS security parameters; wherein
the fourth information is used to obtain an indication of a connection state operation via the first terminal.

26. The method according to claim 25, wherein a core network management state of the second terminal is an idle state.

27. The method according to claim 25, wherein the fourth information is generated based on a NAS security parameter of the second terminal.

28. The method according to claim 25, wherein after the sending fourth information to a first terminal, the method further comprises:
receiving sixth information sent by the first terminal; and
performing a connection state related operation based on the sixth information.

29. The method according to claim 28, wherein the performing a connection state related operation comprises at least one of following:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

30. The method according to claim 25, wherein after the sending fourth information to a first terminal, the method further comprises:
performing a default operation in a case that sixth information is not received within time specified in a protocol or configured by a network.

31. The method according to claim 30, wherein the default operation comprises any one of following:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

32. A connection establishment apparatus, applied to a second terminal and comprising:
a fourth sending module, configured to send fourth information to a first terminal in a case that there are no valid access stratum AS security parameters; wherein
the fourth information is used to obtain an indication of a connection state operation via the first terminal.

33. The apparatus according to claim 32, wherein a core network management state of the second terminal is an idle state.

34. The apparatus according to claim 32, wherein the fourth information is generated based on a NAS security parameter of the second terminal.

35. The apparatus according to claim 32, further comprising:
a fourth receiving module, configured to receive sixth information sent by the first terminal; and
a third execution module, configured to perform a connection state related operation based on the sixth information.

36. The apparatus according to claim 35, wherein the third execution module is further configured to perform at least one of following steps:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

37. The apparatus according to claim 32, further comprising:
a fourth execution module, configured to perform a default operation in a case that sixth information is not received within time specified in a protocol or configured by a network.

38. The apparatus according to claim 37, wherein the default operation comprises any one of following:
entering a wirelessly inter-device disconnected state, or releasing a wireless inter-device connection;
switching to or maintaining a wirelessly inter-device connected state, or maintaining a wireless inter-device connection; and
switching to a core network connected state, or performing a core network-connection establishment process.

39. A connection establishment method, applied to a radio access network side device and comprising at least one of following:
receiving first information from a first terminal, and sending or refusing to send the first information to a core network side device, wherein the first information is used by the core network side device to send or refuse to send third information to the radio access network side device based on the first information; and
receiving the first information from the first terminal, and sending or refusing to send the first information to the core network side device, wherein the first information is used by the core network side device to send or refuse to send fifth information to the radio access network side device based on the first information.

40. The method according to claim 39, further comprising:
sending second information to the first terminal, wherein the second information is used for indicating a connection state operation.

41. The method according to claim 39, wherein the first information is non-NAS information.

42. The method according to claim 39, further comprising:
receiving the third information sent by the core network side device, and/or receiving the fifth information sent by the core network side device, and sending second information to the first terminal based on the third information and/or the fifth information, wherein the second information is used for indicating a connection state operation.

43. The method according to claim 39, further comprising:
performing a default operation in a case that the third information and/or the fifth information are/is not received within time specified in a protocol or configured by a network.

44. The method according to claim 43, wherein the default operation comprises: sending or refusing to send second information to the first terminal, wherein the second information is used to indicate a connection state operation.

45. The method according to claim 40, 42 or 44, wherein the second information comprises at least one of following:
an indication of a release operation;
an indication of a connection operation;
an indication of a core network-connection operation of the first terminal;
an indication of a release operation of an inter-device connection;
an indication of a connection operation of an inter-device connection; and
an indication of a core network-connection operation of a second terminal.

46. A connection establishment apparatus, applied to a radio access network side device and comprising:
a fifth receiving module, configured to: receive first information from a first terminal, and send or refuse to send the first information to a core network side device, wherein the first information is used by the core network side device to send or refuse to send third information to the radio access network side device based on the first information; and
a sixth receiving module, configured to: receive the first information from the first terminal, and send or refuse to send the first information to the core network side device, wherein the first information is used by the core network side device to send or refuse to send fifth information to the radio access network side device based on the first information.

47. The apparatus according to claim 46, further comprising:
a fifth sending module, configured to send second information to the first terminal, wherein the second information is used for indicating a connection state operation.

48. The apparatus according to claim 46, wherein the first information is non-NAS information.

49. The apparatus according to claim 46, further comprising:
a seventh receiving module, configured to: receive the third information sent by the core network side device, and/or receive the fifth information sent by the core network side device; and
a sixth sending module, configured to send second information to the first terminal based on the third information and/or the fifth information, wherein the second information is used for indicating a connection state operation.

50. The apparatus according to claim 46, further comprising:
a fifth execution module, configured to perform a default operation in a case that the third information and/or the fifth information are/is not received within time specified in a protocol or configured by a network.

51. The apparatus according to claim 49, wherein the default operation comprises: sending or refusing to send second information to the first terminal, wherein the second information is used to indicate a connection state operation.

52. The apparatus according to claim 47, 49 or 51, wherein the second information comprises at least one of following:
an indication of a release operation;
an indication of a connection operation;
an indication of a core network-connection operation of the first terminal;
an indication of a release operation of an inter-device connection;
an indication of a connection operation of an inter-device connection; and
an indication of a core network-connection operation of a second terminal.

53. A connection establishment method, applied to a core network side device and comprising:
receiving, via a radio access network side device, first information from a first terminal, or receiving, via the radio access network side device, first information comprising fourth information from a second terminal; and
sending or refusing to send third information to the radio access network side device based on the first information, wherein the third information is used by the radio access network side device to send second information to the first terminal based on the third information; or
sending or refusing to send fifth information to the radio access network side device based on the fourth information, wherein the fifth information is used by the radio access network side device to send second information to the first terminal based on the fifth information.

54. The method according to claim 53, wherein the first information is non-NAS information, and the fourth information is non-NAS information.

55. The method according to claim 53, wherein a core network management state of the first terminal is an idle state, and/or a core network management state of the second terminal is an idle state.

56. The method according to claim 53, further comprising:
verifying the first information based on a NAS security parameter of the first terminal, or verifying the first information based on the NAS security parameter of the first terminal and a NAS security parameter of the second terminal, and sending or refusing to send the third information according to a verification result; or
verifying the fourth information based on the NAS security parameter of the second terminal, and sending or refusing to send the fifth information according to a verification result.

57. A connection establishment apparatus, applied to a core network side device and comprising:
an eighth receiving module, configured to: receive, via a radio access network side device, first information from a first terminal, or receive, via the radio access network side device, first information comprising fourth information from a second terminal; and
a seventh sending module, configured to send or refuse to send third information to the radio access network side device based on the first information, wherein the third information is used by the radio access network side device to send second information to the first terminal based on the third information; or
an eighth sending module, configured to send or refuse to send fifth information to the radio access network side device based on the fourth information, wherein the fifth information is used by the radio access network side device to send second information to the first terminal based on the fifth information.

58. The apparatus according to claim 56, wherein the first information is non-NAS information, and the fourth information is non-NAS information.

59. The apparatus according to claim 56, wherein a core network management state of the first terminal is an idle state, and/or a core network management state of the second terminal is an idle state.

60. The apparatus according to claim 56, further comprising:
a first verifying module, configured to verify the first information based on a NAS security parameter of the first terminal, or verify the first information based on a NAS security parameter of the first terminal and a NAS security parameter of the second terminal; and
a ninth sending module, configured to send or refuse to send the third information according to a verification result; or
a second verifying module, configured to verify the fourth information based on a NAS security parameter of the second terminal; and
a tenth sending module, configured to send or refuse to send the fifth information according to a verification result.

61. A terminal, comprising a processor, a memory, and a program or instructions stored in the memory and executable on the processor, wherein when the program or instructions are executed by the processor, steps of the connection establishment method according to any one of claims 1 to 12 or steps of the connection establishment method according to any one of claims 25 to 31 are implemented.

62. A radio access network side device, comprising a processor, a memory, and a program or instructions stored in the memory and executable on the processor, wherein when the program or instructions are executed by the processor, steps of the connection establishment method according to any one of claims 39 to 45 are implemented.

63. A core network side device, comprising a processor, a memory, and a program or instructions stored in the memory and executable on the processor, wherein when the program or instructions are executed by the processor, steps of the connection establishment method according to any one of claims 53 to 56 are implemented.

64. A readable storage medium, wherein the readable storage medium stores a program or instructions, and when the program or instructions are executed by a processor, steps of the connection establishment method according to any one of claims 1 to 12, steps of the connection establishment method according to any one of claims 25 to 31, steps of the connection establishment method according to any one of claims 39 to 45, or steps of the connection establishment method according to any one of claims 53 to 56 are implemented.

65. A chip, comprising a processor and a communications interface, wherein the communications interface is coupled to the processor, and the processor is configured to execute a program or instructions to implement the connection establishment method according to any one of claims 1 to 12, the connection establishment method according to any one of claims 25 to 31, the connection establishment method according to any one of claims 39 to 45, or the connection establishment method according to any one of claims 53 to 56.

66. A computer program product, wherein the computer program product is stored in a non-volatile storage medium, and configured to be executed by at least one processor to implement the connection establishment method according to any one of claims 1 to 12, the connection establishment method according to any one of claims 25 to 31, the connection establishment method according to any one of claims 39 to 45, or the connection establishment method according to any one of claims 53 to 56.
